(19) Europäisches Patentamt

European Patent Office

Office européen des brevets

(11) **EP 2 723 083 A2**

(12) **EUROPEAN PATENT APPLICATION**

(43) Date of publication:
23.04.2014 Bulletin 2014/17

(51) Int Cl.:
*H04N 19/597* (2014.01)       *H04N 19/86* (2014.01)

(21) Application number: 13183913.6

(22) Date of filing: 11.09.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.09.2012 KR 20120100237**

(71) Applicant: **Samsung Electronics Co., Ltd Gyeonggi-do 443-742 (KR)**

(72) Inventors:
• **Lim, Il Soon**
  **443-742 Gyeonggi-do (KR)**
• **Wey, Ho Cheon**
  **443-742 Gyeonggi-do (KR)**
• **Lee, Jae Joon**
  **443-742 Gyeonggi-do (KR)**

(74) Representative: **D'Halleweyn, Nele Veerle Trees Gertrudis**
**Arnold & Siedsma**
**Sweelinckplein 1**
**2517 GK Den Haag (NL)**

(54) **Apparatus and method for processing image using correlation between views**

(57)     A method and apparatus for processing an image using correlation between views may include a noise removal unit to remove noise from at least one input depth image, a view transformation unit to perform view transformation of a depth space of a first view among the at least one input depth image, so that the depth space of a first view of a second view is transformed to a depth space of a first view, a weighted mean filter unit to generate at least one weighting coefficient from a first depth image of the first view and the depth space of a first view, and to generate a weighted mean filter using the generated weighting coefficient, and a depth image transformation unit to transform a third depth image from the first depth image and the depth space of a first view, by applying the generated weighted mean filter.

**FIG. 1**

EP 2 723 083 A2

**Description**

Example embodiments of the following description relate to an apparatus and method for processing an image using correlation between views, and more particularly, to an image processing apparatus and method that may support a restoration function in a pre-filter and an in-loop filter in compression of a depth image.

A three-dimensional (3D) image compression system may be used to compress a color image and a depth image, for example a depth map. For example, an H.264/advanced video coding (AVC) scheme, an H.264/multiview video coding (MVC) scheme, and a high efficiency video coding (HEVC) scheme may be used to efficiently compress a color image. However, an image characteristic of a depth image is completely different from that of a color image.

Existing standards used to compress or encode images may include, for example, H.261, H.263, moving picture experts group (MPEG)-1, MPEG-2, MPEG-4, H.264, HEVC, and the like.

Existing compression standards are slightly different from each other, but typically are configured with similar structures including motion estimation, motion compensation, transformation encoding, and entropy encoding.

In particular, H.264 and HEVC are known to increase a total encoding efficiency, by increasing a subjective image quality and by enabling more precise prediction in a motion estimation and compression process, by minimizing a block boundary distortion in a restored image.

The above described distortion minimization mechanisms typically use a deblocking filter. Such a deblocking filter exhibits good performance in an image with a low bit rate. However, in a high-quality image, performance of the deblocking filter may hardly be exhibited, or encoding performance may even be reduced.

Additionally, an adaptive loop filter (ALF) that is recently adopted for a compression standard may be used to minimize an error between an original image and a restored image. When both the ALF and the deblocking filter are applied to a high-quality image, an encoding efficiency may be increased.

A typical ALF was used as a restoration filter based on a Wiener filter.

Recently, a method for increasing an objective image quality by setting an ALF subsequent to a deblocking filter is being proposed.

According to a first aspect of the invention there is provided an image processing apparatus, comprising: a noise removal unit adapted to remove noise from a first input depth image corresponding with a depth space of a first view and a second input depth image corresponding with a depth space of a second view, in order to obtain a low noise first input depth image and a low noise second input depth image; a view transformation unit adapted to perform a view transformation of the low noise second depth image ($Y_2$), so that the depth space ($Z_2$) of the second view is transformed to the depth space of the first view and a transformed depth space ($d; Z_{2\to1}$) is obtained; a weighted mean filter generating unit adapted to generate at least one weighting coefficient ($W_1$, $W_2$) from the transformed depth space ($d; Z_{2\to1}$) and from the low noise depth space of the first view ($Z_1$), and to generate a weighted mean filter using the at least one generated weighting coefficient; and a depth image transformation unit adapted to transform the low noise depth space of the first view ($Z_1$) and the transformed depth space of the first view ($Z_{2\to1}$) into a third depth space ($\hat{Z}_1$) by applying said at least one weighting coefficient ($W_1$, $W_2$) of the generated weighted mean filter, wherein the transformed third depth image is used to encode a depth image.

In that way, according to embodiments of the invention, the similarity between the first view and the second view can be increased, allowing to the quality of the encoded depth image, as well as the compression rate.

Such embodiments may be operated as an inter-view filter when used as a pre-processing unit arranged at pre-processing position in a system.

According to a second aspect of the invention there is provided an image processing apparatus, comprising: a view transformation unit adapted to perform a view transformation of a second depth image ($Y_2$) corresponding with a depth space of a second view, so that the depth space ($Z_2$) of the second view is transformed to the depth space of the first view and a transformed depth space ($d; Z_{2\to1}$) is obtained; a weighted mean filter generating unit adapted to generate at least one weighting coefficient ($W_1$, $W_2$) from the transformed depth space ($d; Z_{2\to1}$) and from the space of the first view ($Z_1$), and to generate a weighted mean filter using the at least one generated weighting coefficient; and a depth image transformation unit adapted to transform the depth space of the first view ($Z_1$) and the transformed depth space of the first view ($Z_{2\to1}$) into a third depth space ($\hat{Z}_1$) by applying said at least one weighting coefficient ($W_1$, $W_2$) of the generated weighted mean filter, wherein the transformed third depth image is used to encode a depth image. Such an embodiment of an image processing apparatus is particularly useful when operated as an inter-view filter when used as an in-loop unit arranged at an in-loop position in a system.

According to another aspect there is provided an image processing apparatus that includes a noise removal unit to remove noise from at least one input depth image, a view transformation unit to perform view transformation of a depth space of a first view among the at least one input depth image, so that the depth space of a first view of a second view is transformed to a depth space of a first view, a weighted mean filter unit to generate at least one weighting coefficient from a first depth image of the first view and the depth space of a first view, and to generate a weighted mean filter using the generated weighting coefficient, and a depth image transformation unit to transform a third depth image from the first depth image and the depth space of a first view, by applying the generated weighted mean filter, wherein the transformed third depth image is used to encode a depth image.

The noise removal unit may remove noise from the at least one input depth image, using a range operation.

The view transformation unit may transform the second depth image to the depth space, and may transform the second view of the second depth image to the first view using the depth space.

The weighted mean filter unit may determine a threshold using at least one of a standard deviation, a variance, a gradient, and a resolution of at least one of the first depth image and the depth space of a first view, and may generate the weighting coefficient using the determined threshold.

The foregoing and/or other aspects are also achieved by providing an image processing apparatus that includes a view transformation unit to perform view transformation of a second depth image among the at least one input depth image, so that the depth space of a first view of a second view is transformed to a depth space of a first view, a weighted mean filter unit to determine a threshold based on an image characteristic of at least one of a first depth image of the first view and the depth space of a first view, and perform weighted mean filtering on the depth space based on the determined threshold, and a depth image transformation unit to transform the filtered depth space to a third depth image of an image area, and to transmit the third depth image to a picture buffer.

The weighted mean filter unit may determine the threshold, based on a compression condition, and an image characteristic of at least one of the first depth image and the depth space of a first view.

The weighted mean filter unit may determine the threshold, for each access unit, or for each slice, based on a quantization parameter (QP), and an image characteristic of at least one of the first depth image and the depth space of a first view.

The foregoing and/or other aspects are achieved by providing an image processing method that includes removing, by a noise removal unit, noise from at least one input depth image, performing, by a view transformation unit, view transformation of a second depth image among the at least one depth image from which the noise is removed, so that the depth space of a second view is transformed to a depth space of a first view ($Z_{2 \to 1}$), generating, by a weighted mean filter unit, at least one weighting coefficient ($W_1$, $W_2$) from a first depth image ($Y_1$) of the first view and the transformed depth space of the first view ($Z_{2 \to 1}$), generating, by the weighted mean filter unit, a weighted mean filter using the generated weighting coefficient, and transforming, the first depth image ($Y_1$) and the transformed depth space of the first view ($Z_{2 \to 1}$), by applying the generated weighted mean filter, into a third depth image, wherein the transformed third depth image is used to encode a depth image.

The performing of the view transformation may include transforming, by the view transformation unit, the second depth image to the depth space, and transforming, by the view transformation unit, the second view of the second depth image to the first view using the depth space.

The generating of the at least one weighting coefficient may include determining, by the weighted mean filter unit, a threshold using at least one of a standard deviation, a variance, a gradient, and a resolution of at least one of the first depth image and the transformed depth space of a first view, and generating, by the weighted mean filter unit, the weighting coefficient using the determined threshold.

The foregoing and/or other aspects are also achieved by providing an image processing method, wherein transforming, by applying the generated weighted mean filter comprises that includes determining, by the weighted mean filter unit, a threshold based on a compression condition and an image characteristic of at least one of a first depth image of the first view and the transformed depth space of a first view, performing, by the weighted mean filter unit, weighted mean filtering on the transformed depth space based on the determined threshold.

The determining of the threshold may include determining the threshold, for each access unit, or for each slice, based on a QP, and an image characteristic of at least one of the first depth image and the transformed depth space of a first view.

The determining of the threshold may include performing filtering on the transformed depth space of first view using a plurality of thresholds, and determining, to be a final threshold, a threshold corresponding to an image quality that is most similar to an image quality of an original image, among the plurality of thresholds.

The determining of the threshold may include performing filtering on the transformed depth space of th first view using a plurality of weights, and determining, to be a final weight, a weight corresponding to an image quality that is most similar to an image quality of an original image, among the plurality of weights.

Additional aspects, features, and/or advantages of example embodiments will be set forth in part in the description which follows and, in part, will be apparent from the description, or may be learned by practice of the disclosure.

BRIEF DESCRIPTION OF THE DRAWINGS

These and/or other aspects and advantages will become apparent and more readily appreciated from the following description of the example embodiments, taken in conjunction with the accompanying drawings of which:

FIG. 1 illustrates a block diagram of an image processing apparatus operated as an inter-view filter of a pre-processing position according to example embodiments;

FIG. 2 illustrates a block diagram of an image processing apparatus operated as an inter-view filter of an in-loop position according to example embodiments;

FIG. 3 illustrates a diagram of an encoder of a three-dimensional (3D) image compression system according to example embodiments;

FIG. 4 illustrates a diagram of a decoder of a 3D image compression system according to example embodiments;

FIG. 5 illustrates a diagram of view transformation of a depth image according to example embodiments;

FIG. 6 illustrates a flowchart of an image processing method of an image processing apparatus operated as an inter-view filter of a pre-processing position according to example embodiments; and

FIG. 7 illustrates a flowchart of an image processing method of an image processing apparatus operated as an inter-view filter of an in-loop position according to example embodiments.

DETAILED DESCRIPTION

Reference will now be made in detail to example embodiments, examples of which are illustrated in the accompanying drawings, wherein like reference numerals refer to like elements throughout. Example embodiments are described below to explain the present disclosure by referring to the figures.

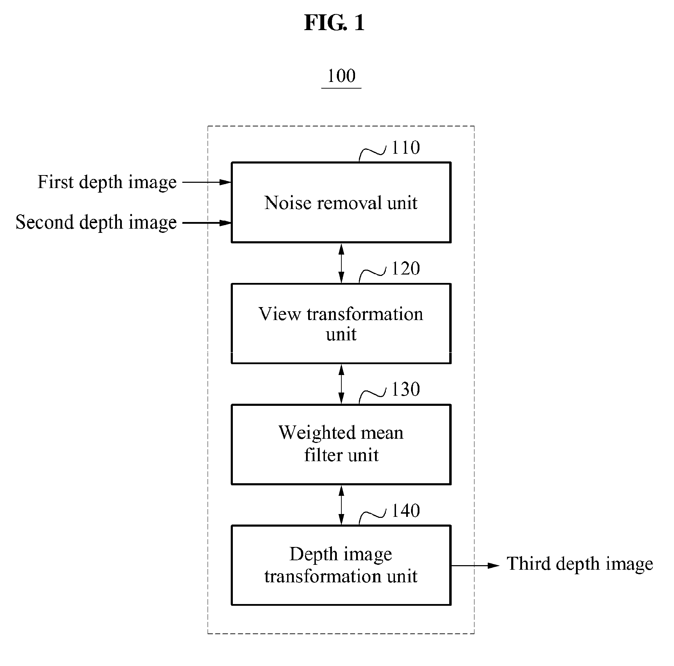

FIG. 1 illustrates a block diagram of an image processing apparatus 100 operated as an inter-view filter when used as a pre-processing unit arranged at pre-processing position in a system, according to example embodiments.

The image processing apparatus 100 of FIG. 1 may support a restoration function in a pre-filter and an in-loop filter. FIG. 1 relates to a function of the pre-filter, and illustrates the image processing apparatus 100 with a pre-processing filtering function to increase a similarity of images between neighboring views and increase a compression rate of an image.

Pre-processing filtering may support a function of minimizing a bit rate of an image by removing a variety of noise and unimportant portions from an original image and of increasing a compression rate, and support a function of maximizing a quality of an image by increasing a similarity of images between neighboring views and of increasing a compression rate.

In FIG. 1, a joint inter-view filtering (JVF) scheme may be provided. The JVF scheme may be used to remove noise from depth images and increase a compression efficiency by performing filtering using a high correlation between depth images in neighboring views when multi-view depth images are input.

The image processing apparatus 100 may include a noise removal unit 110, a view transformation unit 120, a weighted mean filter unit 130, and a depth image transformation unit 140.

The noise removal unit 110 may remove noise from at least one input depth image.

For example, the noise removal unit 110 may be a filter using a range operation to remove noise from the at least one input depth image, wherein the filter is adapted to calculate an output depth image based on an input depth image. The output depth image includes an output depth value for each pixel and the input depth image comprises an input depth value for each pixel, wherein each output depth value is calculated based on a corresponding input depth value and on one or more input depth values of neighboring pixels.

Specifically, the noise removal unit 110 may remove noise from the at least one input depth image, using the following Equation 1:

[Equation 1]

$$\hat{I}(x) = \frac{1}{K} \sum_{y \in M(x)} e^{-\frac{|I(y) - I(x)|^2}{2\sigma_r^2}} I(y)$$

In Equation 1, M(x) denotes a set of neighboring pixels based on x, and *K* denotes a normalization constant. Additionally, *I(x)* denotes a depth pixel of a current position x, *I(y)* denotes a depth pixel of a neighboring position, $|\ |^2$ denotes a square of an absolute value, and $\sigma_r$ denotes an optimal parameter of a range filter as a range weight.

$\hat{I}(x)$ may be interpreted as at least one depth image from which noise is removed.

M(x) denoting the set of the neighboring pixels based on x may form a filter structure, and a shape of the filter structure may be determined based on a direction of autocorrelation.

A single optimal parameter may be generated for each frame of each depth image. Thus, the optimal parameter may reduce an overhead while increasing a quality of a depth image, as opposed to a case where the optimal parameter is generated for each block forming a moving image or picture. M(x) may refer to e.g. a set corresponding with pixel position x and eight neighboring pixel positions immediately adjacent pixel position x.

The noise removal unit 110 may calculate distortions for each optimal parameter $\sigma_r$ in a state in which a possible range of a filter parameter ($[\sigma_{r1} \ \sigma_{r2} \ \sigma_{r3} \ ... \ \sigma_{rL}]$) is set. L indicates the maximum number of filter parameters within a single frame. This is explained in detail in Korean patent applications Nos. 10-2012-0001938 and 10-2012-0012824 in the name of the same inventor. Those applications are included herein by reference.

Additionally, the noise removal unit 110 may determine, to be the optimal parameter $\sigma_r$, a parameter that outputs a minimum distortion among the calculated distortions.

The distortion may be defined to be a sum of squared difference (SSD) between an original depth image and a restored depth image.

Additionally, the distortion may be defined to be an SSD between an image obtained by combining an original color image with an original depth image, and an image obtained by combining a compressed color image with a restored color image.

The noise removal unit 110 may determine the optimal parameter based on modeling.

The noise removal unit 110 may determine the optimal parameter, using a quantization parameter (QP) of a current frame of each depth image, and a selected threshold, for example.

The view transformation unit 120 may perform view transformation of a second depth image among the at least one depth image from which the noise is removed, so that a second view of the second depth image may be transformed to a first view of a depth space. The view transformation may include, for example, 'view warping' or 'view projection.'

A depth space and a depth image may be distinguished based on a method of expressing a physical distance.

The depth space indicates a physical 3D space and also indicates a distance between a view and an object.

For example, when a distance between a predetermined position (a viewing plane) and an object is "2m", a value of the depth space is "2". When the distance is "1000m", a value of the depth space is "1000".

The depth image refers to an image including for each pixel a depth value corresponding to a value of the physical depth space, expressed using e.g. an integer between 0 and 255, or a gray scale.

Specifically, the view transformation unit 120 may perform view transformation of the second depth image to correspond to the first view of the depth space, using Equations 2 and 3 as given below.

[Equation 2]

$$z = \frac{1}{\dfrac{Y}{255}\left(\dfrac{1}{Z_{near}} - \dfrac{1}{Z_{far}}\right) + \dfrac{1}{Z_{far}}}$$

In Equation 2, Y denotes a depth value of a depth image represented in the form of an integer from '0' to '255.' Additionally, $Z_{near}$ is the smallest value of the depth space corresponding with the depth image, $Z_{far}$ is the largest value of the depth space corresponding with the depth image, and z is the value of the depth space corresponding with the depth value.

For the second view, Equation 2 becomes:

$$Z_2 = \cfrac{1}{\cfrac{Y_2}{255}\left(\cfrac{1}{Z_{near}} - \cfrac{1}{Z_{far}}\right) + \cfrac{1}{Z_{far}}}$$

wherein $Z_2$ is the value of the depth space for the second view and $Y_2$ is the corresponding depth value of the depth image, preferably after removal of noise, i.e.

$$Y_2 = \widehat{I_2}(x).$$

For the first view, Equation 2 becomes:

$$Z_1 = \cfrac{1}{\cfrac{Y_1}{255}\left(\cfrac{1}{Z_{near}} - \cfrac{1}{Z_{far}}\right) + \cfrac{1}{Z_{far}}}$$

wherein $Z_1$ is the value of the depth space for the second view and $Y_1$ is the corresponding depth value of the depth image, preferably after removal of noise, i.e.

$$Y_1 = \widehat{I_1}(x).$$

When the view transformation of the second depth image $Y_2$ is performed, the view transformation unit 120 may transform a neighboring view to a current view.
For example, the view transformation unit 120 may transform the second view of the depth space.

[Equation 3]

$$d = \frac{f \cdot l}{z}$$

In Equation 3, f may be interpreted as a focal length, and *l* may be interpreted as a baseline spacing. Additionally, d may be interpreted as a value of a depth space of the first view, and z may be interpreted as a value of the depth space of the second view, i.e. $z = Z_2$. When a multiview camera is disposed in a one-dimensional (1D) parallel arrangement $d = Z_{2\to1}$.
Equation 3 may be applied to multi-view cameras disposed in a one-dimensional (1D) parallel arrangement. An equation of view transformation may be determined based on an arrangement of multi-view cameras.
The weighted mean filter unit 130 may generate at least one weighting coefficient from a first depth image of the first view, and from the second depth image on which the view transformation to the first view is performed, and may generate a weighted mean filter using the generated weighting coefficient. Hereinafter, the second depth image on which the view transformation to the first view is performed may be referred to as the 'depth space of a first view.'
A weighted mean filter having a threshold in the weighted mean filter unit 130 may be represented by Equations 4 and 5 as given below.

[Equation 4]

$$\widehat{Z_1} = W_1 \cdot Z_{2 \to 1} + W_2 \cdot Z_1$$

In Equation 4, $W_1$ and $W_2$ may be interpreted as weighting coefficients, Z may be interpreted as a depth space, $Z_{2 \to 1}$ may be interpreted as a depth space in which a second view is transformed to a first view, $Z_1$ may be interpreted as a depth space in the first view, and $\widehat{Z}_1$ may be interpreted as an output in the first view, that is, an output of a weighted mean filter with respect to the first view.

The weighted mean filter unit 130 may determine the weighting coefficients of Equation 4, under conditions defined in the following Equation 5:

[Equation 5]

$$\mathrm{if} |Z_{2 \to 1} - Z_1| \le T_{pre}, W_1 = W_2 = 0.5$$
$$otherwise, W_1 = 0, W_2 = 1$$

In Equation 5, $T_{pre}$ may be interpreted as a threshold of a pre-processing operation.

Additionally, in Equation 5, $W_1$ and $W_2$ may be interpreted as weighting coefficients, Z may be interpreted as a depth space, $Z_{2 \to 1}$ may be interpreted as a depth space in which a second view is transformed to a first view, $Z_1$ may be interpreted as a depth space in the first view, and $Z_2$ may be interpreted as a depth space in the second view.

The weighted mean filter unit 130 may analyze an image characteristic of a depth image, and may determine the threshold. The image characteristic may include a standard deviation, a variance, a gradient, and a resolution of the depth image, for example.

For example, the weighted mean filter unit 130 may determine a threshold, using at least one of a standard deviation, a variance, a gradient, and a resolution of at least one of the first depth image and the depth space of a first view, and may generate a weighting coefficient using the determined threshold.

The weighted mean filter unit 130 may calculate a threshold by analyzing an image for each sequence, for each access unit, or for each slice.

The access unit may refer to a set of a color image and a depth image that correspond to an identical time.

When the second view of the second depth image is transformed to the first view, a depth image similar to the first depth image of the first view may be output.

The depth image transformation unit 140 may perform weighted mean filtering of Equation 4 on the first depth image and the depth space of a first view, by using a threshold in a depth space, and may generate an image area in the depth space. In other words, using Equation 2 Y1 can be transformed to Z1, and Z1 may then be used in Equation 4.

The depth image transformation unit 140 may transform a third depth image from the first depth image of the first view and the depth space of a first view, by applying the generated weighted mean filter.

The depth image transformation unit 140 may use the transformed third depth image to encode a depth image.

The generated third depth image may be transferred to an encoder of a three-dimensional (3D) image compression system.

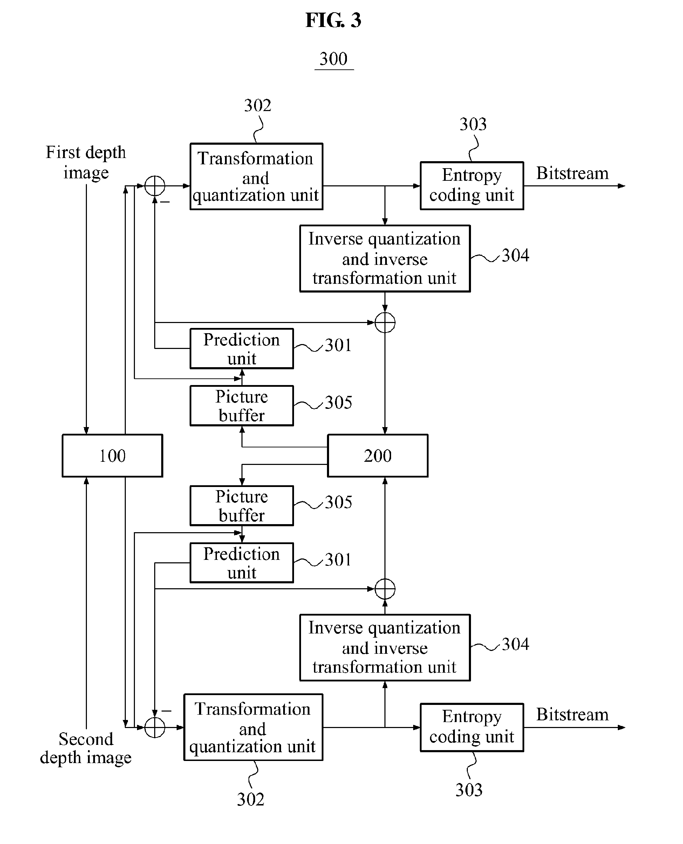

An example in which the third depth image is used to encode a depth image will be further described with reference to FIG. 3.

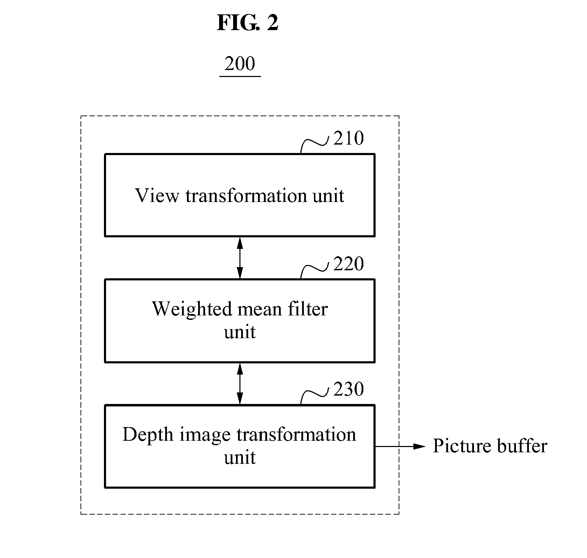

FIG. 2 illustrates a block diagram of an image processing apparatus 200 operated as an inter-view filter when used as an in-loop unit arranged at an in-loop position in a system, according to example embodiments.

The image processing apparatus 200 of FIG. 2 may perform an in-loop filtering function in a 3D image compression system, and may support a function of increasing a similarity between neighboring views of a compressed depth image, of maximizing a quality of the compressed depth image, and of increasing a compression rate.

In FIG. 2, a JVF scheme may be provided. The JVF scheme may be used to remove noise from depth images and increase a compression efficiency by performing filtering using a high correlation between depth images in neighboring views when multi-view depth images are input.

The image processing apparatus 200 may include a view transformation unit 210, a weighted mean filter unit 220, and a depth image transformation unit 230.

The view transformation unit 210 may perform view transformation of a second depth image, so that a second view of the second depth image may be transformed to a first view of a depth space.

Subsequently, the weighted mean filter unit 220 may determine a threshold based on an image characteristic of at least one of the first depth image and the depth space of a first view.

Additionally, the weighted mean filter unit 220 may determine the threshold based on a compression condition associated with a depth image.

For example, the weighted mean filter unit 220 may variably determine a threshold of an in-loop inter-view filter, based on the compression condition as well as the image characteristic.

Specifically, the weighted mean filter unit 220 may determine the threshold, based on the compression condition and the image characteristic of at least one of the first depth image and the depth space of a first view.

The weighted mean filter unit 220 may determine the threshold for each access unit or for each slice, based on a QP and the image characteristic of at least one of the first depth image and the depth space of a first view.

Additionally, the weighted mean filter unit 220 may perform weighted mean filtering on the depth space, based on the determined threshold.

The depth image transformation unit 230 may transform the filtered depth space to a third depth image of an image area, and may transmit the third depth image to a picture buffer.

An example in which the third depth image is used to encode a depth image will be further described with reference to FIG. 3.

The image processing apparatuses 100 and 200 may be available in a field of producing, compressing, transmitting, and displaying images. Additionally, the image processing apparatuses 100 and 200 may be available in a 3D image field, such as a 3D TV, a multi-view video, a super multi-view video (SMV), and a free view TV (FTV), for example, to provide a user with a 3D effect. In particular, the image processing apparatuses 100 and 200 may be used in a field of reducing a bit rate of an image due to a limited bandwidth.

FIG. 3 illustrates a diagram of an encoder 300 of a 3D image compression system according to example embodiments. The image processing apparatuses 100 and 200 may be applied to the encoder 300.

In FIG. 3, the encoder 300 of the 3D image compression system may include the image processing apparatuses 100 and 200, a prediction unit 301, a transformation and quantization unit 302, an entropy coding unit 303, an inverse quantization and inverse transformation unit 304, and a picture buffer 305. The image processing apparatus 100 may be operated as an inter-view filter when used as a pre-processing unit arranged at a pre-processing position in a system, and the image processing apparatus 200 may be operated as an inter-view filter when used as an in-loop unit arranged at an in-loop position in a system.

The encoder 300 may perform pre-processing on at least one input depth image, using the image processing apparatus 100.

Specifically, the image processing apparatus 100 may perform a pre-processing filtering function of increasing a similarity of images between neighboring views and increasing a compression rate of images.

For example, the image processing apparatus 100 may provide a JVF scheme that is used to remove noise from depth images and increase a compression efficiency by performing filtering using a high correlation between depth images in neighboring views when multi-view depth images are input.

Accordingly, the image processing apparatus 100 may remove noise from the at least one input depth image.

For example, the image processing apparatus 100 may use a range operation to remove noise from the at least one input depth image.

Specifically, the image processing apparatus 100 may remove noise, using a set of neighboring pixels, a normalization constant, a depth pixel of a current position, a depth pixel of a neighboring position, or an optimal parameter of a range filter as a range weight, for example.

The image processing apparatus 100 may calculate distortions for each filter parameter in a state in which a possible range of a filter parameter is set.

Additionally, the image processing apparatus 100 may determine, to be the optimal parameter, a parameter that outputs a minimum distortion among the calculated distortions.

The image processing apparatus 100 may determine the optimal parameter based on modeling.

The image processing apparatus 100 may determine the optimal parameter, using a QP of a current frame of each depth image, or a selected threshold, for example.

The image processing apparatus 100 may perform view transformation of a second depth image among the at least one depth image from which the noise is removed, so that a second view of the second depth image may be transformed to a first view of a depth space. The view transformation may include, for example, 'view warping' or 'view projection.'

The image processing apparatus 100 may transform the second view of the depth space. In this instance, the image processing apparatus 100 may perform the view transformation, using a focal length, a baseline spacing, or a depth value of the first view, for example.

The image processing apparatus 100 may generate at least one weighting coefficient from a first depth image of the first view, and from the view-transformed second depth image, and may generate a weighted mean filter using the generated weighting coefficient.

The image processing apparatus 100 may determine a threshold, using at least one of a standard deviation, a variance, a gradient, and a resolution of at least one of the first depth image and the depth space of a first view, and may generate a weighting coefficient using the determined threshold.

The image processing apparatus 100 may calculate a threshold by analyzing an image for each sequence, for each access unit, or for each slice.

When the second view of the second depth image is transformed to the first view, a depth image similar to the first depth image of the first view may be output.

The image processing apparatus 100 may perform weighted mean filtering on the first depth image and the depth space of a first view, by using a threshold in a depth space, and may generate an image area in the depth space.

For example, the image processing apparatus 100 may transform a third depth image from the first depth image of the first view and the depth space of a first view, by applying the generated weighted mean filter.

The image processing apparatus 100 may use the transformed third depth image to encode a depth image.

The prediction unit 301 may perform intra prediction and inter prediction.

A predicted image output from the prediction unit 301, and a differential image output from the transformation and quantization unit 302 may be combined with the third depth image, so that a compressed image may be generated.

The encoder 300 may perform restoration filtering on the compressed image, using the image processing apparatus 200, may store a result image in the picture buffer 305, and may transfer additional information to the entropy coding unit 303.

The encoder 300 may perform inverse quantization and inverse transformation on an output of the transformation and quantization unit 302, using the inverse quantization and inverse transformation unit 304.

The image processing apparatus 200 may be operated as an inter-view filter in an in-loop position of the encoder 300, and may provide a JVF scheme for removing noise from depth images and increasing a compression efficiency.

Accordingly, the image processing apparatus 200 may perform view transformation of a second depth image, so that a second view of the second depth image may be transformed to a first view of a depth space.

Subsequently, the image processing apparatus 200 may determine a threshold, based on an image characteristic of at least one of the first depth image and the depth space of a first view, and based on a compression condition associated with a depth image.

The image processing apparatus 200 may perform weighted mean filtering on the depth space, based on the determined threshold.

The image processing apparatus 200 may determine a threshold $T_{in\text{-}loop}$ as a sum of a base value $T_{base}$ and an increment value $T_{delta}$, using the following Equation 6:

[Equation 6]

$$T_{in\text{-}loop} = T_{base} + T_{delta}$$

$$T_{base} = \frac{1}{\mathrm{Var}\left[F\right]}$$

$$T_{delta} = 4 \cdot 2^{-\frac{QP}{18}}$$

In Equation 6, $T_{in\text{-}loop}$ may be interpreted as the threshold, $T_{base}$ may be interpreted as the base value, and $T_{delta}$ may be interpreted as the increment value.

The image processing apparatus 200 may determine the base value $T_{base}$, by analyzing an image characteristic of a depth image, such as a standard deviation, a variance, a gradient, and a resolution of the depth image, for example.

The image processing apparatus 200 may determine the increment value $T_{delta}$, using a QP, that is, one of compression conditions.

Equation 6 is merely an example, and accordingly the threshold may be determined using a monotonically decreasing function.

In an example, filtering may be performed using a plurality of thresholds without analyzing a characteristic of a depth image, and a threshold corresponding to an image quality that is most similar to a quality of an original image among the plurality of thresholds may be determined to be a final threshold. To determine whether an image quality is similar to a quality of an original image, a peak signal-to-noise ratio (PSNR), an SSD, a sum of absolute difference (SAD), and the like may be used. For example, when a quality of an encoded image is similar to a quality of the original image, compared to a quality of a filtered image, filtering may not be performed, and an input image may be transferred as an output image without any change. The final threshold, and a flag used to determine whether filtering is performed may be included in slice data or an access unit, and may be transmitted as a bitstream.

In an example, filtering may be performed on a depth image using a plurality of weights w, and a weight corresponding to an image quality that is most similar to a quality of an original image among the plurality of weights w may be determined to be a final weight. To determine whether an image quality is similar to a quality of an original image, a PSNR, an SSD, a SAD, and the like may be used. For example, when a quality of an encoded image is similar to a quality of the original image, compared to a quality of a filtered image, filtering may not be performed, and an input image may be transferred as an output image without any change. The final weight may be included in slice data or an access unit, and may be transmitted as a bitstream. The above description may be implemented using a pseudo code, as shown in Table 1 below. In particular, when the final weight is set to '1,' an encoded image may be output from a decoder without filtering, and accordingly a running time required for a filtering operation may be saved.

Table 1 relates to a pseudo code, and illustrates a process of calculating a distortion between an original image and a filtered image and determining a final weight.

[Table 1]

```
// Number of viewpoint: 3
// Input: Coded depth maps within the identical access unit
// Output: Restored depth maps
//          The best weighting coefficient


BEGIN

  FOR w=0.1 to 1.0 STEP 0.1 DO
     FOR main=1 to 3 STEP 1 DO
        FOR sub=1 to 3 STEP 1 DO
           IF(main!=sub)  // To avoid the identical case
              Project the sub depth map to the main viewpoint.

              // For each viewpoint, we obtain the restored depth map
              // by weighted mean operation(w· z_main+(1-w)· z_sub→main).
              Do the weighted mean operation.
           ENDIF
        ENDFOR
     ENDFOR

     For each weighting coefficient, calculate the distortion
     between original depths and filtered depth maps.
     // distortion = SSD(Original D_1, Restored D_1) +
     //              SSD(Original D_2, Restored D_2) +
     //              SSD(Original D_3, Restored D_3) +

  ENDFOR
  Choose the best weighting coefficient with the minimum distortion.
  Store the best restored depth map into Picture Buffer.
  Write the best weighting coefficient per access unit to the bitstream.

END
```

The image processing apparatus 200 may transform the depth space to an image area, and may store the third depth image in the picture buffer 305 so that the third depth image may be used as a reference image.

The image processing apparatus 200 may transform the filtered depth space to a third depth image of an image area, and may transmit the third depth image to the picture buffer 305.

The threshold $T_{in\text{-}loop}$ may be calculated for each access unit or for each slice, and may be recorded in a bitstream through an entropy coding process.

The bitstream may be transmitted to a receiving end through a channel, and may be used in decoding.

Tables 2 and 3 show additional information recorded in a bitstream. The additional information of Tables 2 and 3 may be interpreted as an element that is newly added to syntax of a compression system.

[Table 2]

| Slice_Data() | |
|---|---|
| { | |
| ... | |
| Threshold $T_{in-loop}$ | |
| ... | |
| } | |

Table 2 shows additional information, such as a threshold, for example, recorded in a bitstream for each slice.

[Table 3]

| Access_Unit() | |
|---|---|
| { | |
| ... | |
| Threshold $T_{in-loop}$ | |
| ... | |
| } | |

Table 3 shows additional information, such as threshold, for example, recorded in a bitstream for each access unit.

[Table 4]

| Slice_Data() | |
|---|---|
| { | |
| ... | |
| Weighting_coefficient | |
| ... | |
| } | |

Table 4 shows additional information, such as a weight, for example, recorded in a bitstream for each slice.

[Table 5]

| Access_Unit() | |
|---|---|
| { | |
| ... | |
| Weighting_coefficient | |
| ... | |
| } | |

Table 5 shows additional information, such as a weight, for example, recorded in a bitstream for each access unit.

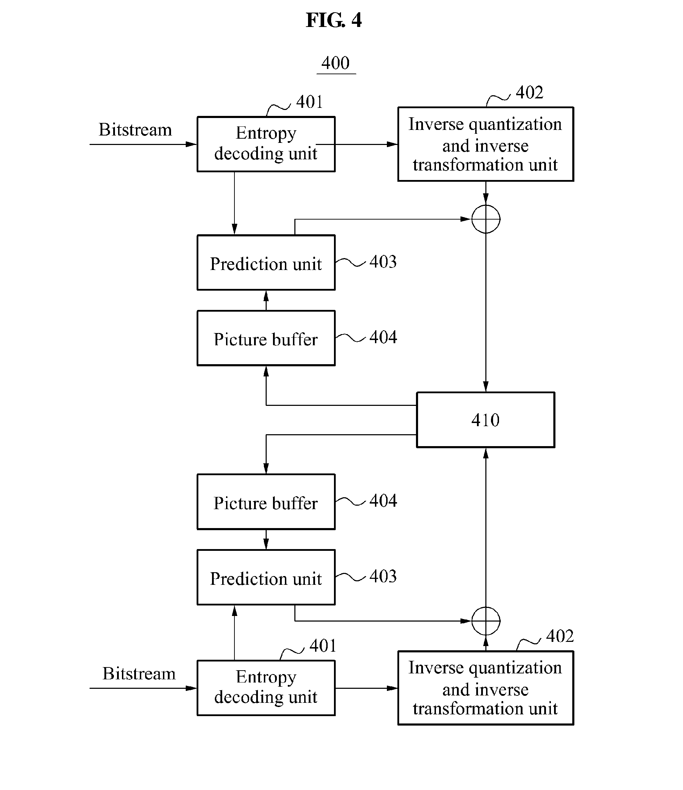

FIG. 4 illustrates a diagram of a decoder 400 of a 3D image compression system according to example embodiments. In the decoder 400, an image processing apparatus 410 may be implemented as a loop filter applied to an in-loop position.

Referring to FIG. 4, the image processing apparatus 410 may be included as a loop filter in the decoder 400.

The decoder 400 may include an entropy decoding unit 401, an inverse quantization and inverse transformation unit 402, a prediction unit 403, a picture buffer 404, and the image processing apparatus 410.

The decoder 400 may receive a bitstream from an encoder of the 3D image compression system, using the entropy decoding unit 401, and may acquire additional information from the received bitstream.

Additionally, the decoder 400 may restore a depth image based on the acquired additional information, using the inverse quantization and inverse transformation unit 402, and may store the restored depth image in the picture buffer 404 through the image processing apparatus 410.

The image processing apparatus 410 may remove noise from depth images and increase a compression efficiency, by performing filtering using a high correlation between depth images in neighboring views from a bitstream corresponding to input multi-view depth images.

The prediction unit 403 may perform intra prediction and inter prediction.

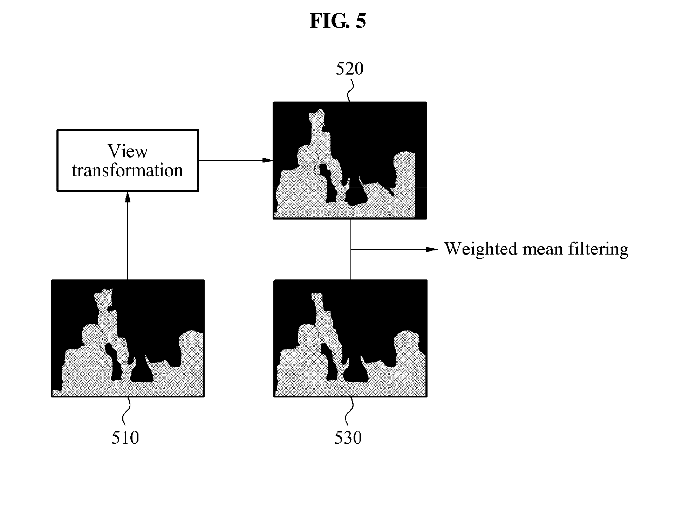

FIG. 5 illustrates a diagram of view transformation of a depth image according to example embodiments.

An image processing apparatus according to example embodiments may perform view transformation of a second depth image 510, so that a second view of the second depth image 510 may be transformed to a first view. The image processing apparatus may perform weighted mean filtering on a first depth image 530 and a depth space of a first view 520.

The depth space of a first view 520 may be similar to the first depth image 530. The image processing apparatus may perform weighted mean filtering by applying a threshold to the depth space of a first view 520 and the first depth image 530 in a depth space, using a similarity, that is, correlation between the depth space of a first view 520 and the first depth image 530.

Accordingly, the image processing apparatus may transform the depth space of a first view 520 and the first depth image 530 to a third depth image.

Therefore, using the image processing apparatus, it is possible to increase a quality of a depth image and to increase a compression rate in a 3D image compression system.

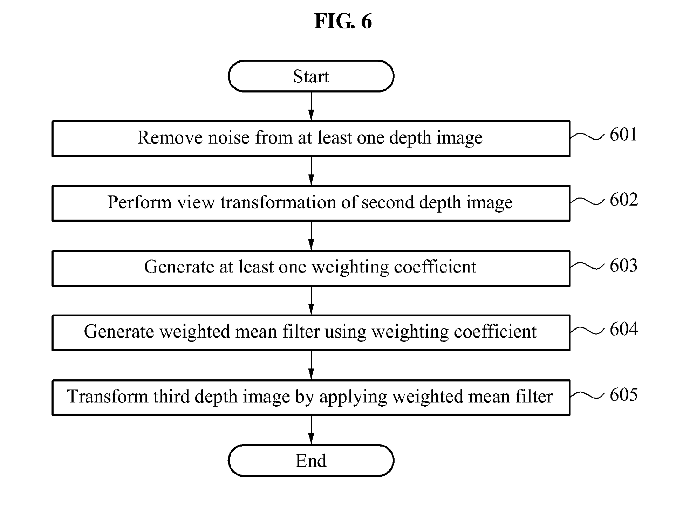

FIG. 6 illustrates a flowchart of an image processing method of an image processing apparatus operated as an inter-view filter of a pre-processing position according to example embodiments.

Referring to FIG. 6, in operation 601, a noise removal unit of the image processing apparatus may remove noise from at least one input depth image.

In the image processing method of FIG. 6, a JVF scheme may be provided. The JVF scheme may be used to remove noise from depth images and increase a compression efficiency by performing filtering using a high correlation between depth images in neighboring views when multi-view depth images are input.

For example, in operation 601, a range operation may be used to remove noise from the at least one input depth image.

Specifically, noise may be removed, using a set of neighboring pixels, a normalization constant, a depth pixel of a current position, a depth pixel of a neighboring position, or an optimal parameter of a range filter as a range weight, for example.

In operation 602, a view transformation unit of the image processing apparatus may perform view transformation of a second depth image among the at least one depth image from which the noise is removed, so that a second view of the second depth image may be transformed to a first view of a depth space.

The view transformation unit may transform the second depth image to the depth space, and may transform the second view of the second depth image to the first view using the depth space.

In operation 602, the view transformation unit may perform the view transform from the second view to the first view. In this instance, the view transformation may be performed using a focal length, a baseline spacing, or a depth value of the first view, for example.

In operation 603, a weighted mean filter unit of the image processing apparatus may generate at least one weighting coefficient from a first depth image of the first view and the depth space of a first view.

The weighted mean filter unit may determine a threshold using at least one of a standard deviation, a variance, a gradient, and a resolution of at least one of the first depth image and the depth space of a first view.

Additionally, the weighted mean filter unit may generate the weighting coefficient based on the determined threshold.

In operation 604, the weighted mean filter unit may generate a weighted mean filter, using the generated weighting coefficient.

In the image processing method of FIG. 6, at least one weighting coefficient may be generated from the first depth image and the depth space of a first view, and a weighted mean filter may be generated using the generated weighting coefficient.

Additionally, a threshold may be determined using at least one of a standard deviation, a variance, a gradient, and a resolution of at least one of the first depth image and the depth space of a first view, and a weighting coefficient may be generated using the determined threshold.

In operation 605, a depth image transformation unit of the image processing apparatus may transform a third depth image from the first depth image and the depth space of a first view, by applying the generated weighted mean filter.

The transformed third depth image may be used to encode a depth image.

Therefore, by using the image processing method of FIG. 6, it is possible to minimize a bit rate of an image by removing a variety of noise and unimportant portions from an original image, and to increase a compression rate.

Additionally, it is possible to maximize a quality of an image by increasing a similarity of images between neighboring views, and to increase a compression rate.

Furthermore, it is possible to provide a JVF scheme that is used to remove noise from depth images and increase a compression efficiency by performing filtering using a high correlation between depth images in neighboring views when multi-view depth images are input.

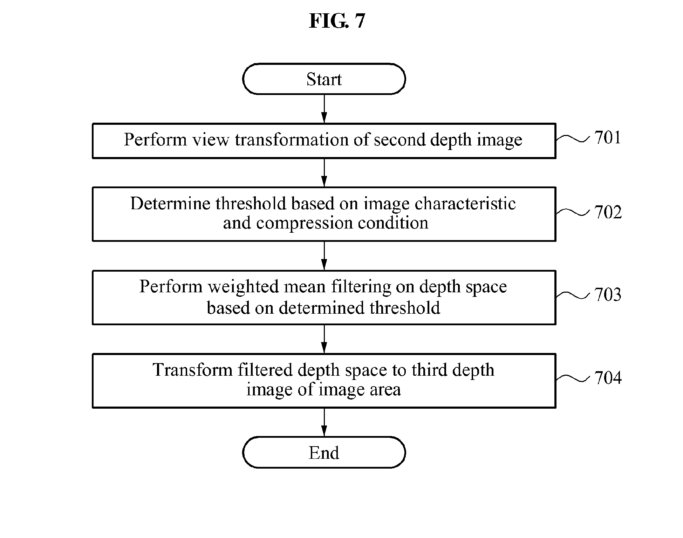

FIG. 7 illustrates a flowchart of an image processing method of an image processing apparatus operated as an inter-view filter of an in-loop position according to example embodiments.

Referring to FIG. 7, in operation 701, a view transformation unit of the image processing apparatus may perform view transformation of a second depth image, so that a second view of the second depth image may be transformed to a first view of a depth space.

In operation 702, a weighted mean filter unit of the image processing apparatus may determine a threshold, based on a compression condition and an image characteristic of at least one of the first depth image and the depth space of a first view.

The threshold may be determined for each access unit or for each slice, based on a QP and the image characteristic of at least one of the first depth image and the depth space of a first view.

In operation 703, the weighted mean filter unit may perform weighted mean filtering on the depth space, based on the determined threshold.

In operation 704, a depth image transformation unit of the image processing apparatus may transform the filtered depth space to a third depth image of an image area, and may transmit the third depth image to a picture buffer.

Therefore, by using the image processing method of FIG. 7, it is possible to maximize a quality of an image by increasing a similarity between neighboring views of a compressed depth image, and to increase a compression rate in a 3D image compression system.

The image processing methods of FIGS. 6 and 7 may also be applied to a color image. When the image processing methods of FIGS. 6 and 7 are applied to a color image, a view of the color image may be transformed to another view, using disparity information of a depth image corresponding to the color image.

The methods according to the above-described example embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa.

Although example embodiments have been shown and described, it would be appreciated by those skilled in the art that changes may be made in these example embodiments without departing from the principles and spirit of the disclosure, the scope of which is defined in the claims and their equivalents.

**Claims**

1.  An image processing apparatus, comprising:

    a noise removal unit adapted to remove noise from a first input depth image corresponding with a depth space of a first view and a second input depth image corresponding with a depth space of a second view, in order to obtain a low noise first input depth image and a low noise second input depth image;

a view transformation unit adapted to perform a view transformation of the low noise second depth image ($Y_2$), so that the depth space ($Z_2$) of the second view is transformed to the depth space of the first view and a transformed depth space (d; $Z_{2\to1}$) is obtained;

a weighted mean filter generating unit adapted to generate at least one weighting coefficient ($W_1$, $W_2$) from the transformed depth space (d; $Z_{2\to1}$) and from the low noise depth space of the first view ($Z_1$), and to generate a weighted mean filter using the at least one generated weighting coefficient; and

a depth image transformation unit adapted to transform the low noise depth space of the first view ($Z_1$) and the transformed depth space of the first view ($Z_{2\to1}$) into a third depth space ($^{\wedge}Z_1$) by applying said at least one weighting coefficient ($W_1$, $W_2$) of the generated weighted mean filter, wherein the transformed third depth image is used to encode a depth image.

2. The image processing apparatus of claim 1, wherein the noise removal unit is configured to remove noise from the first and the second input depth image, using a range operation.

3. The image processing apparatus of any of the previous claims, wherein the weighted mean filter unit is configured to determine a threshold using at least one of a standard deviation, a variance, a gradient, and a resolution of at least one of the first depth image and the depth space of a first view, and to generate the at least one weighting coefficient using the determined threshold.

4. An image processing apparatus of any of the previous claims, wherein
the weighted mean filter unit is adapted to determine a threshold based on an image characteristic of at least one of the first depth image of the first view and the transformed depth space of a first view, and perform weighted mean filtering on the depth space of a first view based on the determined threshold.

5. The image processing apparatus of any one of the previous claims, wherein the weighted mean filter unit is adapted to determine the threshold based on a compression condition, and an image characteristic of at least one of the first depth image and the transformed depth space of a first view.

6. The image processing apparatus of claim 4 or 5,
wherein the weighted mean filter unit is adapted to determine the threshold, for each access unit, or for each slice, based on a quantization parameter (QP), and an image characteristic of at least one of the first depth image and the transformed depth space of a first view.

7. Encoder comprising an image processing apparatus of any one of the previous claims.

8. An image processing method, comprising:

removing, by a noise removal unit, noise from at least one input depth image;

performing, by a view transformation unit, view transformation of a depth space of a second view ($Z_2$) among the at least one depth image from which the noise is removed, so that the depth space of a second view is transformed to a depth space of a first view ($Z_{2\to1}$) ;

generating, by a weighted mean filter unit, at least one weighting coefficient ($W_1$, $W_2$) from a first depth image ($Y_1$) of the first view and the transformed depth space of the first view ($Z_{2\to1}$);

generating, by the weighted mean filter unit, a weighted mean filter using the generated weighting coefficient; and transforming, the first depth image ($Y_1$) and the transformed depth space of the first view ($Z_{2\to1}$), by applying the generated weighted mean filter, into a third depth image;

wherein the transformed third depth image is used to encode a depth image.

9. The image processing method of claim 8, wherein the generating of the at least one weighting coefficient comprises:

determining, by the weighted mean filter unit, a threshold using at least one of a standard deviation, a variance, a gradient, and a resolution of at least one of the first depth image and the transformed depth space of a first view; and

generating, by the weighted mean filter unit, the weighting coefficient using the determined threshold.

10. The image processing method of claim 8, wherein transforming, by applying the generated weighted mean filter comprises: determining, by the weighted mean filter unit, a threshold based on a compression condition and an image characteristic of at least one of a first depth image of the first view and the transformed depth space of a first view;

performing, by the weighted mean filter unit, weighted mean filtering on the transformed depth space based on the determined threshold.

11. The image processing method of claim 10, wherein the determining of the threshold comprises determining the threshold, for each access unit, or for each slice, based on a quantization parameter (QP), and an image characteristic of at least one of the first depth image and the transformed depth space of a first view.

12. The image processing method of claim 10, wherein the determining of the threshold comprises performing filtering on the transformed depth space of the first view using a plurality of thresholds, and determining, to be a final threshold, a threshold corresponding to an image quality that is most similar to an image quality of an original image, among the plurality of thresholds.

13. The image processing method of claim 10, wherein the determining of the threshold comprises performing filtering on the transformed depth space of the first view using a plurality of weights, and determining, to be a final weight, a weight corresponding to an image quality that is most similar to an image quality of an original image, among the plurality of weights.

14. A non-transitory computer readable recording medium storing a program to cause a computer to implement the method of any one of the claims claim 8-13.

# FIG. 1

100

First depth image ——→ [Noise removal unit] ~110

Second depth image ——→

↕

[View transformation unit] ~120

↕

[Weighted mean filter unit] ~130

↕

[Depth image transformation unit] ~140 ——→ Third depth image

**FIG. 2**

200

```
                                    ∿210
┌──────────────────────────────────┐
│                                  │
│     View transformation unit     │
│                                  │
└──────────────────────────────────┘
                  ↕           ∿220
┌──────────────────────────────────┐
│       Weighted mean filter       │
│              unit                │
└──────────────────────────────────┘
                  ↕           ∿230
┌──────────────────────────────────┐
│   Depth image transformation     │──────►  Picture buffer
│              unit                │
└──────────────────────────────────┘
```

**FIG. 3**

300

First depth
image

302
Transformation
and
quantization unit

303
Entropy
coding unit → Bitstream

Inverse quantization
and inverse
transformation unit ~304

Prediction
unit ~301

Picture
buffer ~305

100

200

Picture
buffer ~305

Prediction
unit ~301

Inverse quantization
and inverse
transformation unit ~304

Second
depth image

Transformation
and
quantization unit

Entropy
coding unit → Bitstream

302

303

**FIG. 4**

400

**FIG. 5**

520

View transformation

Weighted mean filtering

510                    530

## FIG. 6

Start

Remove noise from at least one depth image — 601

Perform view transformation of second depth image — 602

Generate at least one weighting coefficient — 603

Generate weighted mean filter using weighting coefficient — 604

Transform third depth image by applying weighted mean filter — 605

End

# FIG. 7

```
                    ┌─────────────┐
                    │    Start    │
                    └─────────────┘
                           │
                           ▼
┌──────────────────────────────────────────────────┐
│   Perform view transformation of second depth image │ ~ 701
└──────────────────────────────────────────────────┘
                           │
                           ▼
┌──────────────────────────────────────────────────┐
│   Determine threshold based on image characteristic │ ~ 702
│            and compression condition                │
└──────────────────────────────────────────────────┘
                           │
                           ▼
┌──────────────────────────────────────────────────┐
│   Perform weighted mean filtering on depth space    │ ~ 703
│           based on determined threshold             │
└──────────────────────────────────────────────────┘
                           │
                           ▼
┌──────────────────────────────────────────────────┐
│     Transform filtered depth space to third depth   │ ~ 704
│              image of image area                    │
└──────────────────────────────────────────────────┘
                           │
                           ▼
                    ┌─────────────┐
                    │     End     │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120001938

- KR 1020120012824